# NOUVEAU FASCICULE DE BREVET EUROPEEN

(11) **EP 2 106 999 B2**
(45) Date de publication et mention de la décision concernant l'opposition: **15.03.2017**
(45) Mention de la délivrance du brevet: 29.12.2010
(21) Numéro de dépôt: 09154430.4
(22) Date de dépôt: 05.03.2009
(51) Int. Cl.: B63H 21/14, F01P 3/20

(54) **Navire pourvu de moyens de récupération d'énergie thermique**
Schiff mit thermischer Energierückgewinnung
Ship equipped with thermal energy recovery means

(30) Priorité: 31.03.2008 FR 0852091
(43) Date de publication de la demande: 07.10.2009
(73) Titulaire: STX FRANCE S.A., 44600 Saint Nazaire (FR)
(72) Inventeur: Berger, Sven, 44360, SAINT ETIENNE DE MONTLUC (FR); Lorang, Matthieu, 44320, SAINT PERE EN RETZ (FR)
(74) Mandataire: Regimbeau

(56) Documents cités:
- EP-B1- 0 202 234
- WO-A-2008/025688
- DE-A1- 2 010 166
- DE-A1- 10 231 734
- DE-T1- 19 681 509
- GB-A- 590 573
- GB-A- 2 010 974
- US-A- 4 553 585
- US-A- 5 797 265
- Déclaration concernant DE 102 31 734 A1
- Publication "Optimun power generation on cruise ships", Torbjörn Henriksson
- Brochure "Technology review: Wärtsilä 64", Wärtsilä
- Brochure "Marine news" n°2-2000, Wärtsilä Corporation
- Brochure "Technology review: Wärtilä 46F", Wärtsilä
- Extrait d'Internet "Schippersgracht Multipurpose Vessel - Ship Technology"
- Brochure "Project guide for Marine Applications: Wärtsilä 46", Wärtsilä

## Description

La présente invention se rapporte notamment à un navire qui est pourvu d'au moins un moteur diesel et d'au moins un équipement, distinct du moteur, qui est consommateur d'énergie thermique.

Les navires actuels, notamment les navires à passagers de fort tonnage, sont traditionnellement équipés d'un, voire de plusieurs moteurs diesel de puissance élevée, qui assurent leur propulsion.

Comme dans tout moteur, certains éléments qu'ils renferment ou qui leur sont associés, sont refroidis par une circulation de liquide de refroidissement.

Dans ce cas particulier de moteurs diesel de navires, on a affaire à deux circuits distincts de liquide de refroidissement, l'un dit à haute température, l'autre dit à basse température. Ces deux circuits peuvent, dans certains cas, avoir des parties communes.

La caractéristique qui différencie essentiellement ces deux circuits est la température du liquide en entrée de moteur.

Celle du circuit à haute température est plus élevée que celle du circuit à basse température.

Le document GB 590 573 A est considéré comme art anténeur le plus proche et décrit toutes les caractéristiques du préambule de la revendication 1.

A titre indicatif, ces températures sont de l'ordre de 70 et 38°C respectivement.

Le circuit à haute température est destiné à refroidir des éléments tels que les cylindres du moteur, tandis que le circuit à basse température est destiné à refroidir des éléments tels qu'un réfrigérant d'huile.

Cette "duplication" de circuit de refroidissement s'explique par le fait que certains composants du moteur pourraient voir leur fonctionnement, et/ou leur structure affecté(s) par un refroidissement trop prononcé.

Par ailleurs, les navires à passagers sont pourvus d'équipements, distincts du moteur, qui sont consommateurs d'énergie thermique. Il s'agit par exemple d'une installation de chauffage d'air, d'une installation de chauffage d'eau, d'un générateur d'eau douce, ou d'un système de chauffage de l'eau de piscines.

On a déjà proposé de récupérer au moins partiellement des calories véhiculées par le liquide du circuit à haute température pour alimenter thermiquement au moins un de ces équipements.

Quant au liquide du circuit à basse température, il est refroidi par échange thermique avec de l'eau de mer, avant de "recirculer" à l'intérieur du moteur.

On comprend aisément qu'il s'agit d'une déperdition d'énergie qui n'est pas négligeable dans un contexte de coût élevé des sources d'énergie fossile.

La présente invention vise à résoudre ce problème, en faisant usage de moyens simple, efficaces et peu coûteux.

Ainsi, l'invention est relative à un navire qui est pourvu :
- d'au moins un moteur diesel dont certains éléments internes, voire externes, sont refroidis par un premier circuit de liquide de refroidissement dit à haute température, tandis que d'autres sont refroidis par un second circuit de liquide de refroidissement dit à basse température, ces circuits se différenciant par la différence de température du liquide en entrée dudit moteur,
- d'au moins un équipement, distincts dudit moteur, consommateur d'énergie thermique,
- de moyens de récupération au moins partielle des calories véhiculées par le liquide du circuit à haute température pour alimenter thermiquement ledit équipement,
- des moyens de récupération au moins partielle des calories véhiculées par le liquide du circuit à basse température pour alimenter thermiquement ledit équipement,
caracterisé par le fait qu'il comprend des moyens de régulation de la température du liquide de refroidissement du circuit à basse température en sortie de moteur.

Ainsi, grâce à l'invention, on améliore grandement le bilan énergétique global du navire.

Selon d'autres caractéristiques avantageuses et non limitatives :
- ledit équipement comprend au moins deux équipements, au moins un étant alimenté thermiquement par le circuit à haute température, tandis que l'autre est alimenté thermiquement par le circuit à basse température ;
- L'équipement est alimenté thermiquement par le circuit à basse température consiste notamment en une installation de chauffage d'air, une installation de chauffage d'eau, un système de chauffage d'eau de piscine ;
- lesdits moyens de récupération comprennent au moins un échangeur thermique au sein duquel circule un liquide à réchauffer ;
- il comprend des moyens de réglage du débit dudit liquide pour alimenter thermiquement lesdits équipements.

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma simplifié d'une première partie d'un montage intégré au navire selon l'invention ;
- la figure 2 est également un schéma simplifié d'une seconde partie d'un montage intégré au navire selon l'invention.

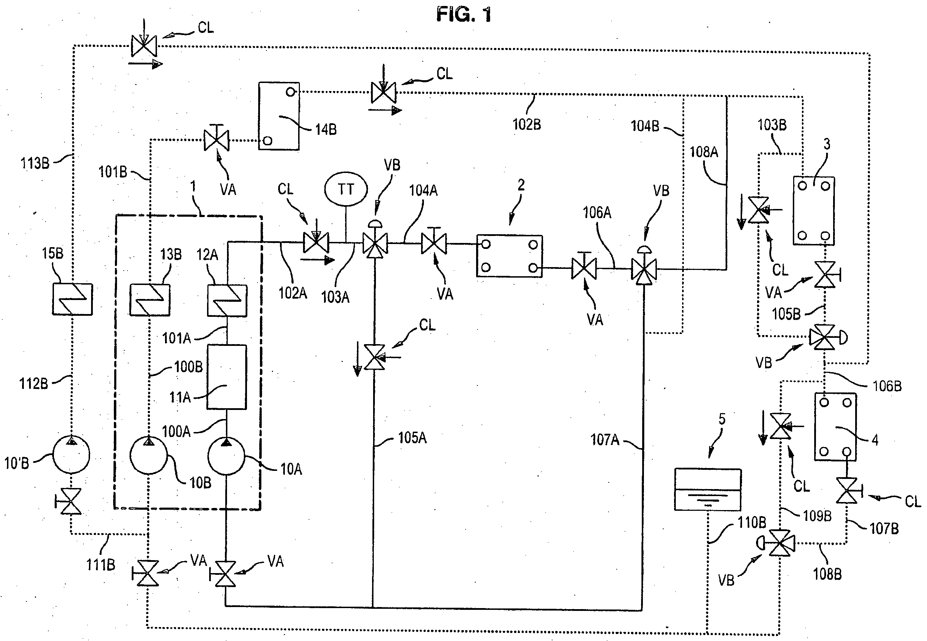

En référence à la figure 1, on a représenté en traits mixtes la délimitation d'un moteur diesel 1 qui équipe le navire.

Bien entendu, quand le nombre de moteurs est plus élevé, par exemple égal à quatre, le montage de la figure 1 est dupliqué autant de fois.

La circulation de liquide de refroidissement dans le circuit dit à haute température est repérée par des traits continus, tandis que la circulation de liquide de refroidissement dans le circuit dit à basse température est repérée en traits pointillés.

De plus, les équipements placés sur ces deux circuits portent des références numériques assorties des initiales A et B, correspondant respectivement aux circuits à haute et à basse températures.

De manière générale, dans l'ensemble de la description, les sigles VA , CL et VB désignent respectivement des vannes d'arrêt, des vannes de réglage de débit, et des vannes de régulation à trois voies.

En référence à la figure 1, on a désigné par la référence 10A une pompe hydraulique qui assure la circulation d'un liquide de refroidissement à haute température tel que de l'eau dans des organes que referme le moteur 1, tels que des cylindres 11 A et un étage 12A de refroidisseur d'air de suralimentation.

Des canalisations 100A et 101 A assurent le transfert de liquide de l'un à l'autre.

En sortie de l'étage 12A de refroidisseur d'air, des canalisations 102A et 103A assurent l'évacuation du liquide de refroidissement, qui a été réchauffé, à l'extérieur du moteur et à ce niveau, il est procédé à un asservissement de la température du liquide à une valeur prédéterminé, par exemple 90°. Dans ce but, au moins un capteur de température TT est placé sur la canalisation.

En sortie du moteur est connecté un échangeur de chaleur 2 dans lequel circule à contre courant, comme on le verra plus loin, un liquide caloporteur destiné à alimenter en énergie thermique un équipement consommateur dont est pourvu le navire.

Les canalisations amont et aval de cet échangeur 2 sont référencées 104 et 106A.

Une boucle de retour 107A permet, via une vanne VA, de recycler le liquide, refroidi lors de sa traversée de l'échangeur 2, vers la pompe 10A.

Entre les canalisations 103A et 104A sont placées une vanne de régulation à trois voies VB, ainsi qu'une canalisation 105, raccordées à la boucle de retour 107A précitée.

Cette canalisation 105 peut faire partie des moyens de régulation de la température du liquide de refroidissement en sortie du moteur. En effet, du fait qu'elle est branchée sur la boucle 107A de retour, elle permet de "ponctionner" une partie du liquide refroidi qui traverse cette boucle, pour ramener à la température d'asservissement, le liquide quittant le moteur. Cet asservissement est de préférence réalisé automatiquement, notamment en fonction de mesures de températures réalisées par des capteurs, notamment celles du capteur précité, et à l'aide de vannes de régulation VB.

Le moteur 1 est également pourvu d'une deuxième pompe 10B, du même type que la précédente, reliée par une canalisation 100B au deuxième étage 13B du système de refroidissement d'air de suralimentation précité. Cette pompe et cet appareillage sont traversés également par un liquide de refroidissement tel que de l'eau et il s'agit ici d'un circuit de refroidissement à basse température.

En sortie de l'équipement 13B, une canalisation 101 B délivre le liquide au sein d'un système de refroidissement de l'huile du moteur 14 et achemine, via une canalisation 102B, le liquide réchauffé vers un échangeur 3, lequel est parcouru à contre-courant par un liquide caloporteur couplé à un équipement consommateur d'énergie thermique.

Conformément à une caractéristique de l'invention, la température du fluide du circuit à basse température est asservie en sortie de moteur.

Pour ce faire, une vanne de régulation à trois voies VB placée à la sortie de l'échangeur 3, permet de « by-passer », c'est à dire de dériver une partie du liquide refroidi, via une boucle 103B.

Comme pour le circuit à haute température, cet asservissement est de préférence effectué automatiquement, par exemple pour obtenir une température de réglage égale à 50°C.

En sortie de l'échangeur 3, une canalisation 106B est couplée avec un second échangeur 4 qui est, quant à lui, traversé à contre-courant par de l'eau de mer. La fonction de cet échangeur est de refroidir encore le liquide de refroidissement, si nécessaire, avant recirculation dans le moteur.

En sortie de ce second échangeur, une vanne de régulation trois voies VB permet de « by passer », c'est à dire de dériver une partie du liquide par une canalisation 109B afin d'obtenir la bonne température en entrée de la pompe 10B, et donc en sortie du moteur.

Une réserve d'eau 5 est branchée sur la canalisation 109B. Elle sert de moyen d'expansion thermique et de mise en charge de l'ensemble de l'installation.

On notera que juste avant l'entrée de la seconde pompe 10B est branchée une canalisation de bifurcation 111 B qui achemine une partie du liquide de refroidissement vers une troisième pompe 10'B à laquelle est connecté, via une canalisation 112B, un système de réfrigération d'un alternateur référencé 15B. Il est connecté via une canalisation 113B à la sortie de l'échangeur 3 précité. La raison de cette connexion après l'échangeur 3 est que la température de liquide en sortie d'alternateur n'est pas suffisante pour que la récupération de chaleur en vaille la peine.

Une canalisation 104B est branchée à la fois sur les canalisations 102B et 107A et permet d'injecter du liquide du circuit à haute température dans le circuit à basse température, ce qui augmente la température du liquide du circuit basse température, et donc la quantité d'énergie récupérable.

A l'inverse, une seconde canalisation 108A est branchée sur les canalisations 102B et 106A et permet de "ponctionner" une partie du liquide du circuit à basse température pour l'injecter dans le circuit à haute température, pour rabaisser la température de celui-ci, avant recirculation dans le moteur.

Comme déjà précisé, on régule la température du liquide de refroidissement du circuit à basse température en sortie du moteur 1.

Cette température régulée est par exemple de l'ordre de 50°.

De cette manière, on a affaire à un liquide qui présente toujours la même température, de sorte que la récupération d'énergie qu'il sera possible d'en tirer, sera toujours optimum, quelle que soit la charge du moteur.

En revanche, la température du liquide qui retourne vers la pompe correspondante présente une température variable. Toutefois, ceci n'est pas handicapant puisque les équipements du moteur traversés par ce liquide supportent une telle variation de température.

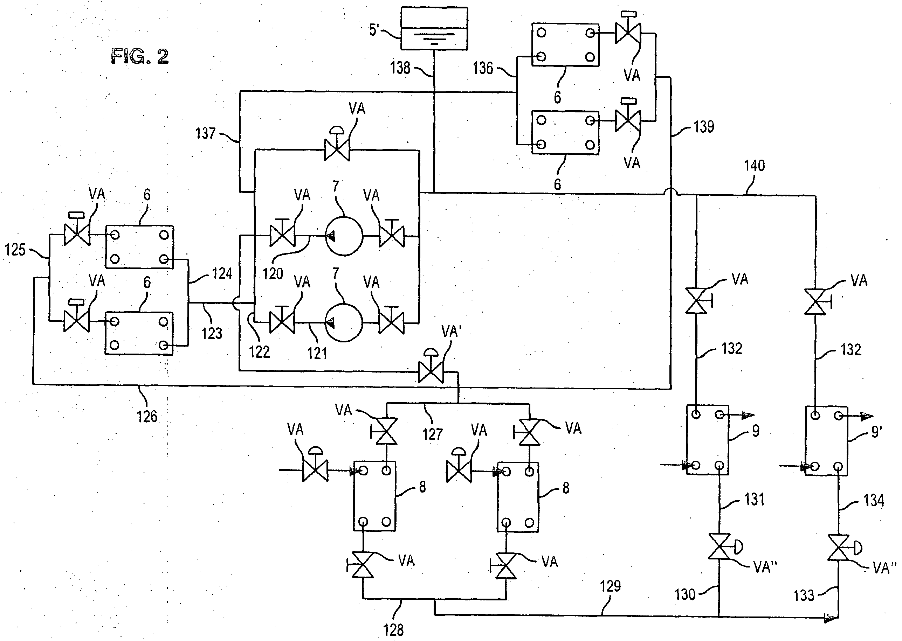

Une deuxième partie de l'installation est visible à la figure 2. On a représenté ici seulement la partie de l'installation relative à la récupération d'énergie sur le circuit à basse température. Celle relative à la récupération d'énergie sur le circuit à haute température est identique et n'a pas été représentée, dans un souci de simplification.

Quatre échangeurs 6 ont été représentés : il s'agit des échangeurs qui sont associés aux quatre moteurs qui équipent un navire.

Cette installation comprend essentiellement deux pompes hydrauliques 7, traversées par de l'eau qui, via un ensemble de canalisations 122, 123 et 124 traversent à contre-courant un couple d'échangeurs.

Parallèlement, une canalisation additionnelle 137 est branchée sur les pompes 7 et dessert, via une canalisation 136, deux autres échangeurs 6B.

Les canalisations de sortie 125, 126 et 139 des échangeurs 6 sont reliées à une double canalisation 127 qui communiquent elle-même avec des réchauffeurs 8 alimentés en vapeur. Ces réchauffeurs permettent d'amener, le cas échéant, de l'énergie calorifique supplémentaire au liquide réchauffé au sein des échangeurs 6. Cette vapeur provient en général de chaudières de récupération installées sur les échappements des moteurs diesel ou encore d'une chaudière à brûleur.

Les canalisations 128 et 129, sont reliées via des canalisations 130, 131, 133 et 134 à des échangeurs 9 et 9' eux-mêmes associés à des équipements du navire consommateur d'énergie thermique.

Les vannes VA" qui équipent ces échangeurs sont prévues pour faire varier le débit de liquide à l'intérieur des échangeurs, en fonction de la demande énergétique.

Les canalisations de retour 132 et 135 ainsi que 140 permettent de ramener le liquide froid vers les pompes 7.

Une caractéristique avantageuse de l'invention est donc que le circuit de récupération fonctionne à « débit variable », ce qui permet d'avoir une température de retour du liquide relativement froide quelque soit la demande en calorie des consommateurs 9, 9'. De ce fait, la récupération d'énergie au niveau des échangeurs 2 ou 3 est toujours optimum.

Sur la boucle de récupération à haute température, les équipements consommateurs demandant une température d'eau élevée sont connectés.

Il s'agit par exemple d'un bouilleur, d'un système de chauffage de l'air ambiant ou d'un système de chauffage de l'eau sanitaire.

Sur la boucle de récupération à basse température, les équipements consommateurs demandant une température d'eau moyenne sont connectés.

Il s'agit par exemple d'un système de chauffage de l'eau de piscines ou d'un système de préchauffage d'air conditionné.

Avec le dispositif de la présente invention, la récupération d'énergie thermique sur les moteurs diesel est optimisée.

Cela permet donc de faire des économies de carburant.

Sans ce système, la vapeur nécessaire à chauffer tous les consommateurs provient soit de chaudières de récupération, soit de chaudières à brûleur, ces derniers consommant du carburant.

Le bilan énergétique du navire est ainsi fortement amélioré.

## Revendications

1. Navire qui est pourvu :
- d'au moins un moteur diesel (1) dont certains éléments internes (11A, 12A), voire externes, sont refroidis par un premier circuit de liquide de refroidissement dit à haute température, tandis que d'autres (13B, 14B, 15B) sont refroidis par un second circuit de liquide de refroidissement dit à basse température, ces circuits se différenciant par la différence de température du liquide en entrée dudit moteur (1), qui est pourvu :
- d'au moins un équipement (9, 9'), distincts dudit moteur (1), consommateur d'énergie thermique,
- de moyens de récupération (2) au moins partielle des calories véhiculées par le liquide du circuit à haute température pour alimenter thermiquement ledit équipement (9,9'),
et qui comprend également des moyens de récupération (3) au moins partielle des calories véhiculées par le liquide du circuit à basse température pour alimenter thermiquement ledit équipement (9, 9')
**caractérisé par le fait qu'**il comprend des moyens de régulation de la température du liquide de refroidissement du circuit à basse température en sortie de moteur (1).

2. Navire selon la revendication 1, **caractérisé par le fait que** qu'il comprend au moins deux équipements, au moins un étant alimenté thermiquement par le circuit à haute température, tandis que l'autre (9, 9') est alimenté thermiquement par le circuit à basse température.

3. Navire selon la revendication 2, **caractérisé par le fait que** ledit équipement (9, 9') alimenté thermiquement par le circuit à basse température consiste notamment en une installation de chauffage d'air, une installation de chauffage d'eau, un système de chauffage d'eau de piscine.

4. Navire selon l'une des revendications précédentes, **caractérisé par le fait que** lesdits moyens de récupération (2, 3) comprennent au moins un échangeur thermique au sein duquel circule un liquide à réchauffer.

5. Navire selon la revendication 4, **caractérisé par le fait qu'**il comprend des moyens de réglage (VA") du débit dudit liquide pour alimenter thermiquement lesdits équipements.

## Patentansprüche

1. Schiff, das mit Folgendem ausgerüstet ist:
- wenigstens einem Dieselmotor (1), von dem bestimmte interne, oder auch externe, Elemente (11A, 12A) durch einen ersten Kühlflüssigkeitskreislauf gekühlt werden, der als Kreislauf hoher Temperatur bezeichnet wird, wohingegen andere (13B, 14B, 15B) durch einen zweiten Kühlflüssigkeitskreislauf gekühlt werden, der als Kreislauf niedriger Temperatur bezeichnet wird, wobei sich diese Kreisläufe durch den Temperaturunterschied der Flüssigkeit am Einlass des Motors (1) unterscheiden, das ausgerüstet ist mit:
- wenigstens einer vom Motor (1) verschiedenen Einrichtung (9, 9'), die ein Wärmeenergieverbraucher ist,
- Mitteln (2) zur wenigstens teilweisen Rückgewinnung der Wärmemenge, die von der Flüssigkeit des Kreislaufs hoher Temperatur transportiert wird, um die Einrichtung (9, 9') mit Wärme zu versorgen,
und das ebenfalls Mittel (3) zur wenigstens teilweisen Rückgewinnung der Wärmemenge umfasst, die von der Flüssigkeit des Kreislaufs niedriger Temperatur transportiert wird, um die Einrichtung (9, 9') mit Wärme zu versorgen,
**dadurch gekennzeichnet, dass** es Mittel zur Regelung der Temperatur der Kühlflüssigkeit des Kreislaufs niedriger Temperatur am Ausgang des Motors (1) umfasst.

2. Schiff nach Anspruch 1, **dadurch gekennzeichnet, dass** es wenigstens zwei Einrichtungen umfasst, wobei wenigstens eine vom Kreislauf hoher Temperatur mit Wärme versorgt wird, wohingegen die andere (9, 9') vom Kreislauf niedriger Temperatur mit Wärme versorgt wird.

3. Schiff nach Anspruch 2, **dadurch gekennzeichnet, dass** es sich bei der Einrichtung (9, 9'), die vom Kreislauf niedriger Temperatur mit Wärme versorgt wird, insbesondere um eine der folgenden Anlagen handelt: eine Luftheizung, eine Wasserheizung, ein System zur Heizung von Schwimmbadwasser.

4. Schiff nach einem der vorhergehenden Ansprüche, **dadurch gekennzeichnet, dass** die Mittel zur Rückgewinnung (2, 3) wenigstens einen Wärmetauscher umfassen, in dem eine aufzuheizende Flüssigkeit zirkuliert.

5. Schiff nach Anspruch 4, **dadurch gekennzeichnet, dass** es Mittel zur Einstellung (VA") des Durchflusses der Flüssigkeit umfasst, um die Einrichtungen mit Wärme zu versorgen.

## Claims

1. Ship equipped with:
- at least one diesel engine (1) of which some internal parts (11A, 12A), even external parts, are cooled by a first liquid cooling circuit, called a high-temperature circuit, whilst others (13B, 14B, 15B) are cooled by a second liquid cooling circuit called a low-temperature circuit, these circuits differing by the difference in temperature of the liquid entering said engine (1), which is equipped with:
- at least one item of equipment (9, 9'), separate from said engine (1), which consumes thermal energy,
- recovery means (2) to recover at least part of the calories conveyed by the liquid in the high-temperature circuit, to supply thermal energy to said items of equipment (9, 9'),
and which also comprises recovery means (3) to recover at least part of the calories conveyed by the liquid in the low-temperature circuit, to supply thermal energy to said items of equipment (9, 9'), **characterized by** the fact that it comprises means to regulate the temperature of the coolant in the low-temperature circuit, as it leaves the engine (1).

2. Ship according to claim 1, **characterized by** the fact that it comprises at least two items of equipment, at least one being thermally supplied by the high-temperature circuit, whilst the other (9, 9') is thermally supplied by the low-temperature circuit.

3. Ship according to claim 2, **characterized by** the fact that said item of equipment (9, 9') thermally supplied by the low-temperature circuit notably consists of an installation to heat air, an installation to heat water, a system to heat swimming-pool water.

4. Ship according to any of the preceding claims, **characterized by** the fact that said recovery means (2, 3) comprise at least one heat exchanger within which a liquid to be heated is circulated.

5. Ship according to claim 4, **characterized by** the fact that it comprises flow control means (VA") to adjust the flow-rate of said liquid thermally supplying said equipment.
